# EUROPEAN PATENT SPECIFICATION

(11) **EP 3 596 516 B1**
(45) Date of publication and mention of the grant of the patent: **24.02.2021**
(21) Application number: 18714852.3
(22) Date of filing: 19.03.2018
(51) Int. Cl.: G02B 3/14, G02B 26/00

(54) **FAST ADAPTIVE LENS FOR THE CORRECTION OF OPTICAL ABERRATIONS**
SCHNELLE ADAPTIVE LINSE ZUR KORREKTUR VON OPTISCHEN ABERRATIONEN
LENTILLE ADAPTATIVE RAPIDE POUR LA CORRECTION D'ABERRATIONS OPTIQUES

(30) Priority: 17.03.2017 IT 201700029962
(43) Date of publication of application: 22.01.2020
(73) Proprietor: Dynamic Optics S.r.l., 46100 Mantova (IT)
(72) Inventor: BONORA, Stefano, I-46100 Mantova (IT); QUINTAVALLA, Martino, I-46100 Mantova (IT)
(74) Representative: Chimini, Francesco
(86) International application number: PCT/IB2018/051825
(87) International publication number: WO 2018/167739

(56) References cited:
- JP-A- H11 133 210
- JP-A- 2000 081 504
- US-A1- 2010 208 357
- US-A1- 2012 170 134

## Description

### Field of the Invention

The present invention relates to the field of adaptive optics.

### Description of the Related Art

Recently, many adaptive lens devices exploiting different principles have been presented. In many of them, tunable optical power has been obtained by the realization of a chamber filled with a transparent liquid made by deformable transparent optical surfaces constituting a so-called liquid lens or fluidic lens.

In these devices, the optical surfaces deformation is obtained exploiting different principles, different materials and different actuators.

A first class of tunable lens devices is determined by adaptive lenses with a liquid chamber of constant volume. In these devices, the constant volume of the liquid chamber is exploited to transfer a force from a few actuators to the optical surfaces in the clear aperture.

For example, in "Variable-focus liquid lens", H. Ren et al, Optics Express Vol. 15, No. 10, 5931-5936, 14 May 2007 and U.S. Patent Application 20070030573, the fluidic lens is based on a pressure induced liquid redistribution within a lens cell. In this design, the lens has an upper aperture that is sealed with a thin elastic outer membrane and a bottom aperture sealed with an inner membrane. Applying an inward pressure to the outer membrane causes the liquid to redistribute and swell the inner membrane outwards which, in turn, forms a plano-convex lens. A similar principle has been presented in ADAPTIVE FLUIDIC PDMS-LENS WITH INTEGRATED PIEZOELECTRIC ACTUATOR, F. Schneider, et al. MEMS 2008, Tucson, AZ, USA, January 13-17, 2008.

In this design the actuation is allowed by the use of soft elastic membranes (e.g., PDMS or other polymers), whose drawback is the low initial surface quality of the adaptive lens in terms of optical aberrations due to the manufacturing process or problems related to the bonding of soft membranes. In addition, the orientation of the lens (vertical or horizontal) has an effect on the shape of the membrane since the force exerted by the gravity on the filling material generates an asymmetrical shape of the lens surface that creates aberrations and degrades the optical quality of the fluidic lens. Because of this effect, the lens size cannot be larger than about 10mm.

US patent application 2010/0208357 A1 proposes the use

of thin glasses instead of polymeric membranes to solve this problem. In this design, the lens shape, and hence the optical power, is tuned by varying the pressure in the chamber and transferring a force from the liquid to the glasses.

In all these publications, the actuation principles are many and include, for example: piezoelectric, electromagnetic or bimetallic-based actuation. However, all these publications demonstrate how to generate only spherical or parabolic wavefronts. This means that these adaptive lenses can only be used to change the focal length of an optical system, such as in optical zoom or autofocusing systems.

WO 2015/114515 describes another type of fluidic adaptive lens realized with rigid windows and piezoelectric actuators. Notably, in addition to the previous patent documents and technical articles, this publication shows how to generate arbitrary wavefronts and not only defocus. An embodiment of this invention uses bimorph actuators, such as the ones used for deformable mirrors and extensively described in many publications [R. Tyson, Adaptive Optics Engineering Handbook, Tyson, R. (ed), CRC Press, 1999]. In addition to the previous comparable fluidic lenses, WO 2015/114515 relies on the use of a spacer that includes a mix of a rigid ring and a soft elastomer. This solution has the advantage of being able to generate arbitrary optical aberrations but with the disadvantage of having a slow response time. The reason for a slow response time is the use of thick spacers that limit the volume change of the liquid chamber, due to the expansion/contraction of the actuators when they are activated. This publication also includes an embodiment with a reservoir in order to be compliant with volume changes. In this solution, the connection between the liquid chamber and the reservoir generates a fluidic impedance that limits the response time of the device.

Moreover, WO 2015/114515 also discloses the use of a glass disc to stiffen the central part of the optical aperture to create a higher degree of spatial modulation of the wavefront shapes. This solution has the disadvantage of creating wavefront distortions by the difference of the refractive index of the stiffening glass disc with respect to the one of the liquid. Although this difference might be reduced by the use of a refractive index matching liquid with the same refractive index and dispersion (change of the refractive index with wavelength) of the glass, the residual errors always have an influence on the transmitted beam.

When the liquid lens is used in optical systems (such as for example a microscope) this effect can reduce the resolution of the acquired images.

Furthermore, the layer of transparent glue used to bond the stiffening disc to the liquid lens aperture creates an additional optical layer that again, can induce a refractive index mismatch or light interference effects, especially if used with coherent light sources such as lasers.

This layer also introduces the problem of a reduced damage threshold when the lens is used with laser beams.

These effects can constitute important limitations to the use of this solution in microscopes that exploit laser-based illumination systems as in the case of modern super resolution techniques such as confocal, two-photons, multiphoton and Stimulated emission depletion (STED) microscopy. The same considerations can be extended to the field of materials processing with lasers.

Additional problems arise taking into account the different temperature dependence of the refractive index of the liquid and the glass disc.

A further limitation of this solution is highlighted when using the device with broadband light beams and/or with wavelengths outside the visible spectral range where it is very difficult to obtain transparent liquids with the same dispersion and a refractive index similar to that of the stiffening glass disc. The same consideration can be made regarding the adhesive bonding layer of the stiffening disc. Further prior art can be found in US 2010/208357 A1, JP 2000 081504 A, JP H11 133210 A and US 2012/170134 A1.

### Summary of the invention

This invention aims to overcome the limitations of the prior art solutions in the realization of adaptive lenses as defined in independent claims 1 and 7.

In particular, an object of the present invention is to provide an adaptive lens which allows to generate arbitrary wavefronts with a high spatial frequency, and having at the same time a fast response time.

Another object of the invention is to provide an adaptive lens having an excellent optical quality and an easy manufacturing process, that is suitable for being used in different optical spectral ranges and/or large optical bandwidths.

Still another object of the invention is to provide an adaptive lens having a larger damage threshold when used with high energy or high power laser sources.

### Brief description of the drawings

Further benefits and advantages of the present invention will become apparent from the following detailed description of some embodiments thereof, with appropriate reference to the accompanying drawings.

In the drawings:
Figure 1 is a schematic view of an adaptive lens structure according to the invention, in one embodiment;
Figure 2 is a schematic view of an adaptive lens structure according to the invention, in another embodiment;
Figure 3 is a cross section of the lens structure of figure 2, along section plane A-A of figure 2;
Figure 4 is diagram showing the response time of the lens structure according to the invention (solid line), compared to the one achievable with prior art lens designs (dashed line);
Figure 5 is a schematic view of an adaptive lens structure according to the invention, in another embodiment;
Figure 6 is a plan top view of the lens structure of Figure 5;
Figure 7 is a schematic view of an adaptive lens structure according to the invention, in another embodiment;
Figure 7a is a modification of the embodiment of figure 7;
Figure 8 shows one of the flexible glass membranes of the lens structure, according to another embodiment;
Figure 9 shows the flexible membrane of Figure 8 when deformed;
Figure 10 shows one of the flexible glass membranes of the lens structure, according to another embodiment, in the deformed state;
Figure 11 is a schematic representation of the effect on the light beam of ad adaptive lens structure employing the flexible glass membranes of figures 8 and 9;
Figure 12 is a schematic representation of the effect on the light beam of ad adaptive lens structure employing the flexible glass membranes of figure 10;
Figures 13 and 14 are schematic views of an adaptive lens structure according to the invention, in a still different embodiment, in the inactive and deformed state, respectively;
Figures 15 and 16 are schematic views of an adaptive lens structure according to the invention, in a still different embodiment, in the inactive and deformed state, respectively;
Figure 17 schematically shows a comparison between the deformation of a conventional lens structure and the lens structure according to the embodiment of figures 15 and 16.

### Detailed description of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention.

Reference will now be made to the drawing figures to describe the present invention in detail according to some preferred embodiments.

Within the scope of this specification:

- "Flexural rigidity" is defined as the bending moment necessary to bend a structure and depends both on the mechanical properties (modulus of elasticity, Poisson ratio) and the geometry of the considered structure;

- "Flexible Glass membrane" is defined as a glass or polymeric window with a low flexural rigidity obtained using a material with a high elastic modulus and a large aspect ratio (lateral size to thickness ratio). A glass membrane shows a high flexibility while still being self-standing. This definition extends to materials transparent to a specific spectral range: glass is a favorite material for UV, visible and near infrared light beams, semiconductors for infrared (for example Germanium) or other crystals and polymers. Typical aspect ratio for this application is between 10 and 1000;
- "Elastomeric layer" is a polymeric or rubber-made structure whose flexural rigidity is high enough to avoid gravitational force effects, and therefore is self-standing. Characteristic of this material is the medium/high aspect ratio and low young modulus. For thin layers, typical aspect ratio for this structure is between 1 and 100;
- "Soft membrane" is a structure with a low flexural rigidity that is not self-standing. Characteristic of this material is the high aspect ratio and low young modulus and high strain at the yield point (stress at which a material begins to deform plastically). Typical aspect ratio for this application is between 1 and 1000;
- "Elastomeric material" is a transparent elastomer or gel material with a low modulus (0.5KPa a 10MPa), high strain (1% - 500%) at the yield point.

In the following description, elements in common to the different embodiments described have been indicated with the same reference numerals.

The adaptive lens structure has an optical axis X along which, in the use of said lens structure, a light beam L is transmitted.

The adaptive lens structure comprises a first and a second spaced apart flexible glass membranes 101, 115.

The first flexible glass membrane has a first outer surface 101a and a first inner surface 101b, opposite said first outer surface. The first flexible glass membrane has a first central portion 101' transparent to the light beam L, which defines one side of the optical aperture of the lens structure.

The second flexible glass membrane 115 has a second inner surface 115a, facing said first inner surface 101b, and a second outer surface 115b, opposite to second inner surface 115a. The second flexible glass membrane 115 has a second central portion 115' transparent to light beam L, which defines the other side of the optical aperture of the lens structure.

In some embodiments, the first and second central portions 101', 115' have the same size and shape; in other embodiments, these central portions 101', 115' can be different in both size and shape. In these cases, the central portion having the smallest cross section defines the cross section of the optical aperture of the lens.

First actuator means 105 are placed on a peripheral portion of the first flexible glass membrane 101; second actuator means 110 are placed on a peripheral portion of the second flexible glass membrane 115.

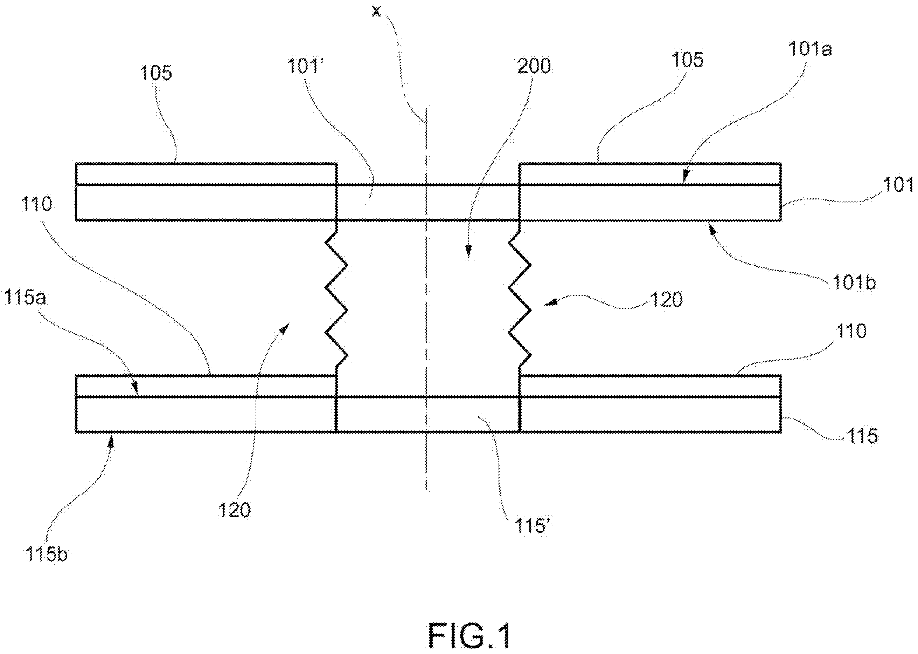

In one embodiment shown in figure 1, the first actuator means 105 are placed on the first outer surface 101a and the second actuator means 110 are placed on the second inner surface 115a.

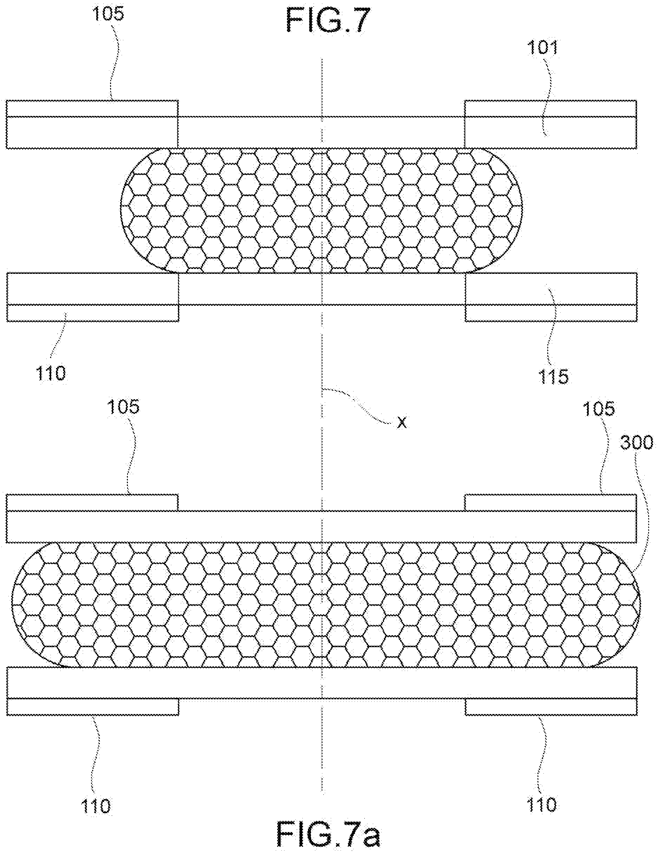

In other embodiments disclosed for example in figures 7 and 7a, the second actuator means 110 are placed on the second outer surface 115b.

The actuator means 105, 110 are suitable for deforming the optical aperture shape reversibly and accordingly to a command signal or a series of command signals. In one preferred embodiment, the command signal is an electric signal; however, the command signal can be of a different nature, such as pneumatic, mechanical, optical, chemical, electromagnetic, electrostatic or a combination thereof.

For example, the actuators means can be piezoelectric, piezoelectric multi-layer, piezoelectric benders, piezoelectric bimorph, electromagnetic, piezoelectric stack, magnetostrictive or bimetallic strip or others. These actuator means can be of any shape, such as annular, square, rectangular or linear.

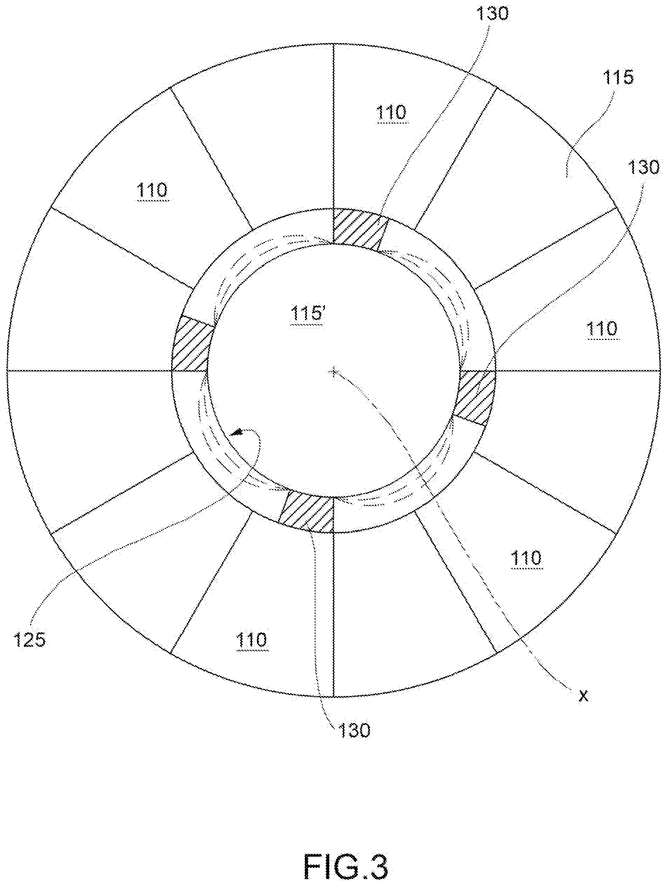

In one embodiment shown in figure 3, the actuators means 105, 110 are divided in independent sectors.

Preferably, the shape of the actuator means 105, 110 matches the shape of the incoming light beam portion to be modulated.

In some embodiments, the shape of the actuator means 105, 110 delimits the transparent central portions 101', 115' .

As said above, the actuator means 105, 110 must be able to induce a deformation of the respective flexible glass membrane. To this purpose, each flexible glass membrane has a flexural rigidity such that a sufficient deformation can be induced by the force exerted by the actuator means 105, 110 when the latter are activated but, at the same time, the effect of other forces, such as vibrations or gravity, are negligible as regards the optical quality. This property is achieved by tuning the glass membrane flexural rigidity by means of a proper choice of the material modulus of elasticity and geometry.

Typical flexural rigidity for this application is between 0.005 and 1 Nm.

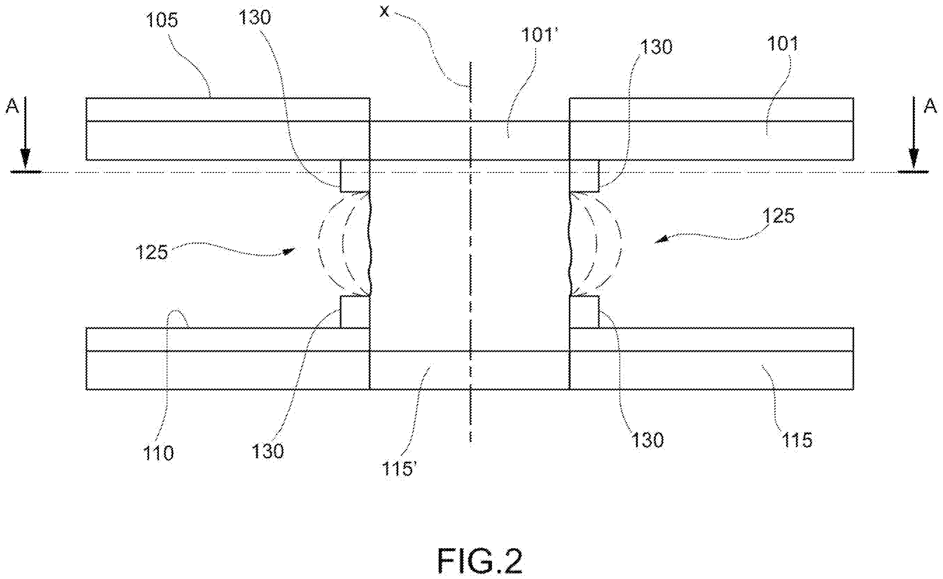

In one embodiment shown in figures 1 and 2, the lens structure comprises a soft membrane 120; 125 to seal the space between the flexible glass membranes 101, 115 so as to form a sealed chamber 200 suitable for receiving a filling liquid.

In some embodiments shown in figures 1 and 2, the space or volume defined by the sealed chamber 200 substantially corresponds to the optical aperture of the lens structure. In other words, the soft membrane 120; 125 extends between the facing edges of the transparent central portions 101', 115' of the flexible glass membranes 101, 115.

This soft membrane 120; 125 can expand when the actuator means are activated, in order to take account for the volume changes of the sealed chamber 200.

Figure 1 shows an example of realization of the soft membrane 120 in the form of a soft membrane bellow.

In one embodiment shown in Figures 2 and 3, the soft membrane 125 is provided with stiffening ribs 130 made of elastomeric layers to support the flexible glass membranes.

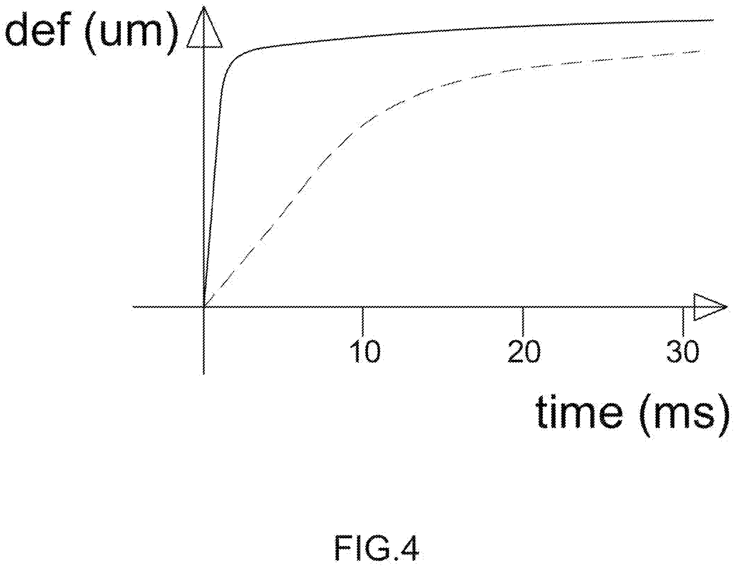

The use of a soft membrane 120; 125 allows shortening the response time of the adaptive lens as compared to other solutions including elastomeric rings and/or rigid spacers. An example of a measured reduction of the rise time is illustrated in the diagram of figure 4, that compares the displacement of the actuator means as a function of time in case of a fluidic lens with sealed chamber according to the prior art (dashed line) and in case of the adaptive lens according to the invention (solid line).

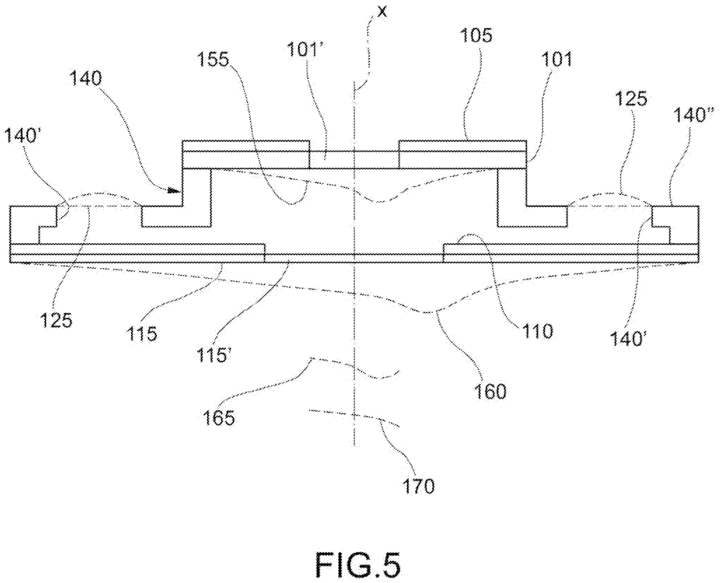

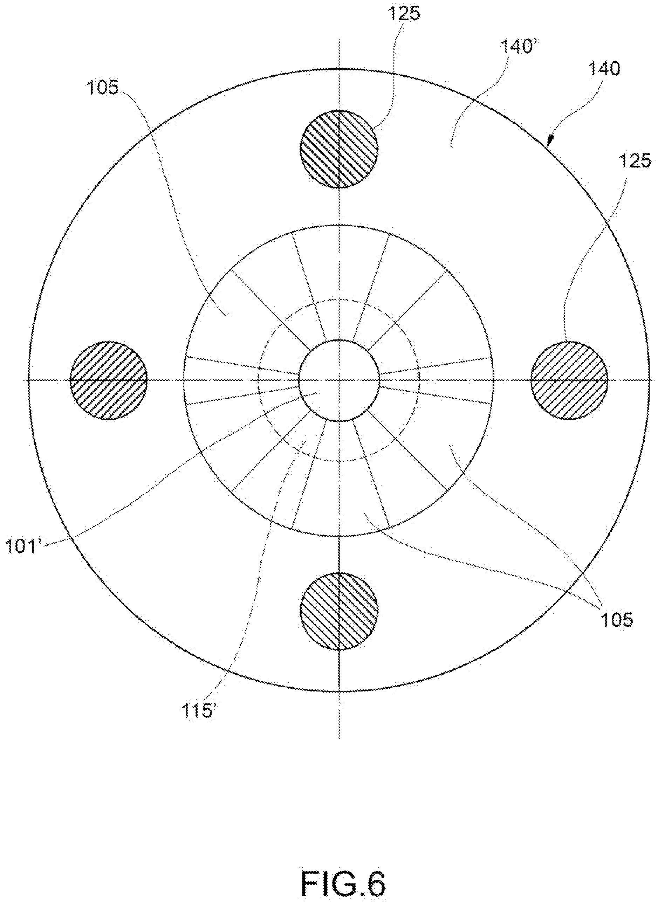

In one embodiment shown in Figures 5 and 6, the adaptive lens structure comprises a rigid frame 140 connecting the flexible glass membranes 101, 115. In the rigid frame 140, a plurality of passing-trough apertures 140' are formed. Each of these apertures 140' is sealed by a soft membrane 125. The soft membranes 125 allow the expansion and contraction of the sealed chamber 200. In this case, sealed chamber 200 is delimited by the two flexible glass membranes 101, 115, the rigid frame 140 and the soft membranes 125.

In one embodiment shown in figures 5 and 6, the radial extension of the second flexible glass membrane 115 is larger than the radial extension of the first flexible glass membrane 101. Furthermore, in this embodiment, the central portion 115' of the second flexible glass membrane 115 is larger than the central portion 101' of the first flexible glass membrane 101.

In this case, the rigid frame 140 comprises a peripheral portion 140" having a radial component extending parallel to the flexible glass membrane 101, 115. The passing-trough apertures 140' are formed in this peripheral portion 140".

In these embodiments including the rigid frame 140, it is not necessary to implement stiffening ribs.

Advantageously, the different cross section of the central portions 101', 115' allow the two sides of the adaptive lens to generate deformations with a different spatial distribution. For example, actuator means 105 coupled to the first flexible glass membrane 101 may generate a different light wavefront shape than the actuator means 110 coupled to the second flexible glass membrane 115.

In figure 5, dashed line 155 shows an example of deformation of the first flexible glass membrane when the first actuator means 105 is activated. The resulting wavefront in the optical aperture is indicated with dashed line 165. Dashed line 160 shows an example of deformation of the second glass membrane 115 when the second actuator means 110 are activated. The resulting wavefront in the optical aperture is indicated with dashed line 170. The difference in the generated wavefront shapes can be exploited to create arbitrary wavefronts by combined activation of the actuator means, such as defocus, astigmatism, coma, trefoil, spherical aberration etc.

In other embodiments of the invention shown in figures 7 and 7a, the space between the flexible glass membranes 101, 115 is completely or partially filled with a transparent elastomeric material 300, for example an elastomer or a gel. In this embodiment, the elastomeric material 300 absorbs the flexible glass membranes deformations and acts as the element that connects the flexible glass membranes 101, 115. Advantageously, in this embodiment, the filling material has a linear response and therefore the response time is faster than in previous cases where the filling liquids have a viscous response to the flexible glass membrane deformation that causes an energy loss that is proportional to the actuation response time. For "linear response" it is meant that the filling material's force that counteracts the force applied by the actuator means is proportional to the amount of the deformation induced by the actuator means; for "viscous response" it is meant that the filling material's force that counteracts the force applied by the actuator means is proportional to the speed of the deformation.

A further advantage of this embodiment is that the elastomeric material 300 is strong enough to support both the flexible glass membranes 101, 115 and therefore there is no need of further spacing or supporting elements, allowing an easier manufacturing process.

Figure 7 shows an embodiment where the elastomeric material 300 extends only to fill the space of the optical aperture between the two glass membranes 101, 115 and their respective actuator means 105, 110.

Figure 7a shows another embodiment where the elastomeric material 300 extends over the entire size of the adaptive lens. Other embodiments - not illustrated in the drawings - can include different thickness of the elastomeric material, for example having a transparent portion in the optical aperture and opaque or colored outside. Other possible embodiments can include mix of different elastomers.

It should be noted that the lens structure according to the embodiments of Figure 1, 2 and 5 can also be realized by using such a elastomeric material in the place of the liquid.

Further modifications or variants to the adaptive lens, including the orientation of the actuator means 105, 110 on the inside or outside of the flexible glass membranes and/or of the transparent central portions 101', 115', or the use of actuators and/or flexible glass membranes having different diameters are included within the scopes of this invention.

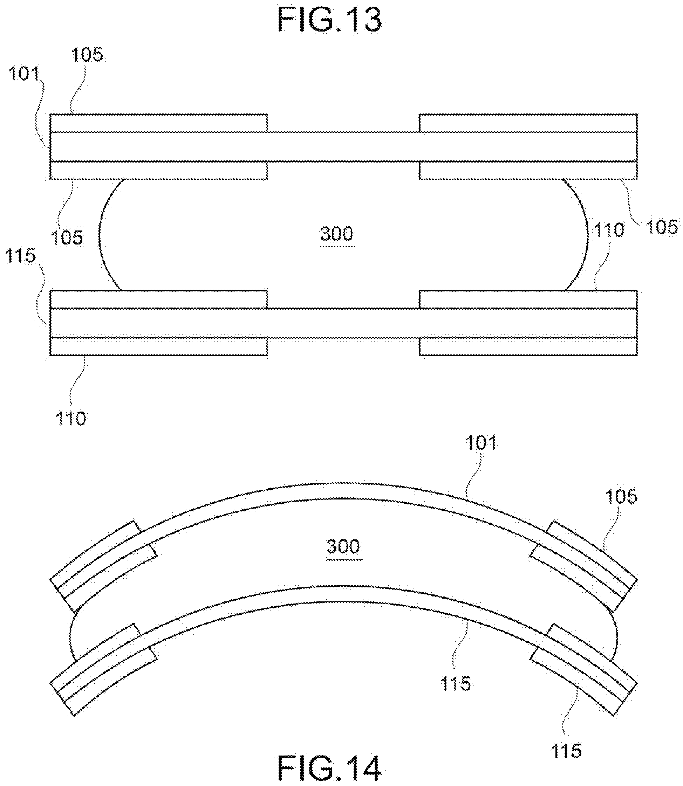

For example, in one embodiment shown in figures 13, 14, the actuator means 105, 110 are placed on both sides of each of the flexible glass membrane 101, 115. With this design, the difference in the expansion of the actuator means and of the flexible glass membranes is symmetric and is cancelled out.

To this end, it should be noted that the robustness to environmental conditions is very important for the use of the adaptive lens in industrial applications. For example, it is well known that two joint plates with different coefficient of thermal expansion (CTE) bends when are subject to temperature difference. This phenomenon is exploited in bimetallic strips to obtain large bending as a function of temperature.

The adaptive lenses shown in previous embodiments can undergo strong unwanted bending because of different CTE of the glass membrane and the piezo actuator. This might be a limitation in industrial and outdoor applications where the environmental conditions are not under control.

To mitigate this problem it is possible to choose materials with similar CTE. This solution is simple but it is not always possible to find components with similar CTE. Furthermore, the manufacturing process of piezo component shows a large variance in the CTE.

Therefore, the layout of Figures 13, 14 is robust to temperature gradients and changes and well suits the use of the adaptive lens in industrial applications.

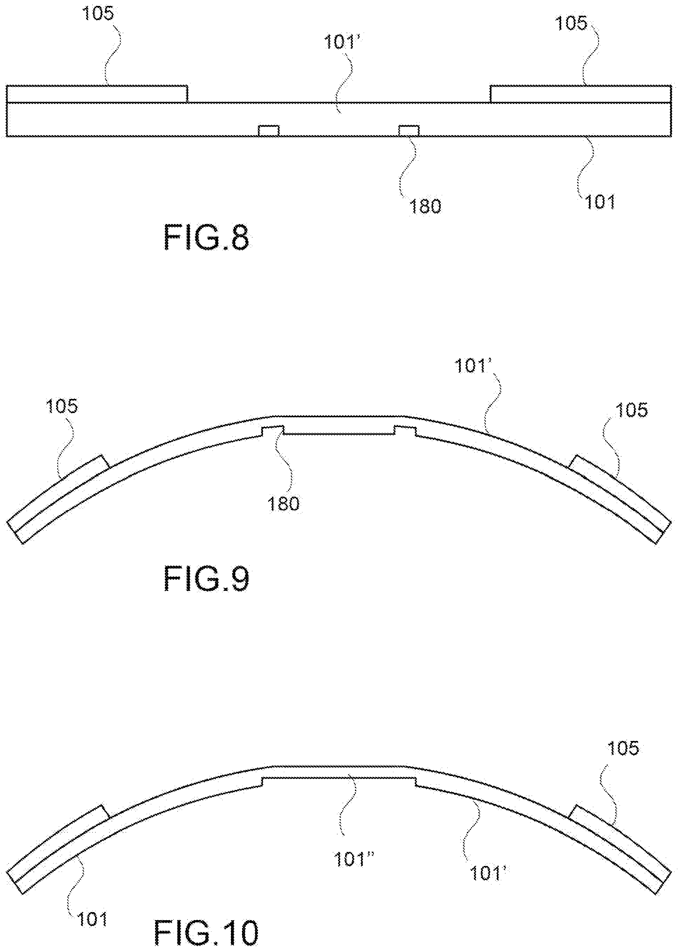

Figure 8 shows a portion of a further embodiment of the adaptive lens comprising a flexible glass membrane 101 with actuator means 105. In this case, the flexible glass membrane 101 is provided with an annular portion 180 of reduced thickness within the transparent central portion 101'. This annular portion 180 offers a lower flexural rigidity and can therefore generate a localized curvature, as shown in Figure 9.

The reduced thickness portion width can be very thin with respect to the transparent central portion 101', having therefore a negligible effect on the transmitted beam wavefront and intensity distribution. For example, preferred values for reduced thickness portion are 100um wide and 50um thick.

Figure 10 shows another possible embodiment where a different curvature of the transparent central portion 101' is induced by reducing the glass membrane thickness in a sub-portion 101" of the transparent central portion 101'.

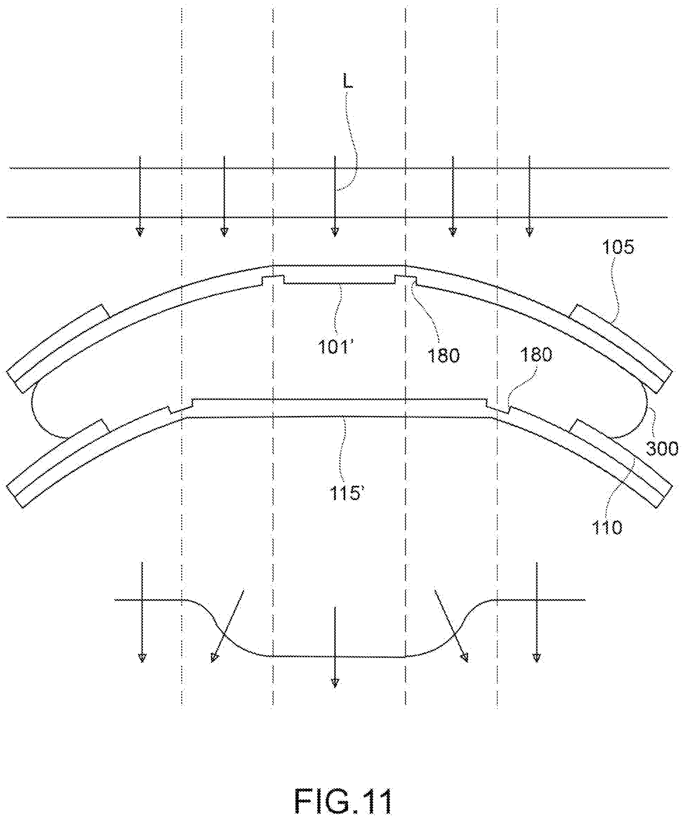

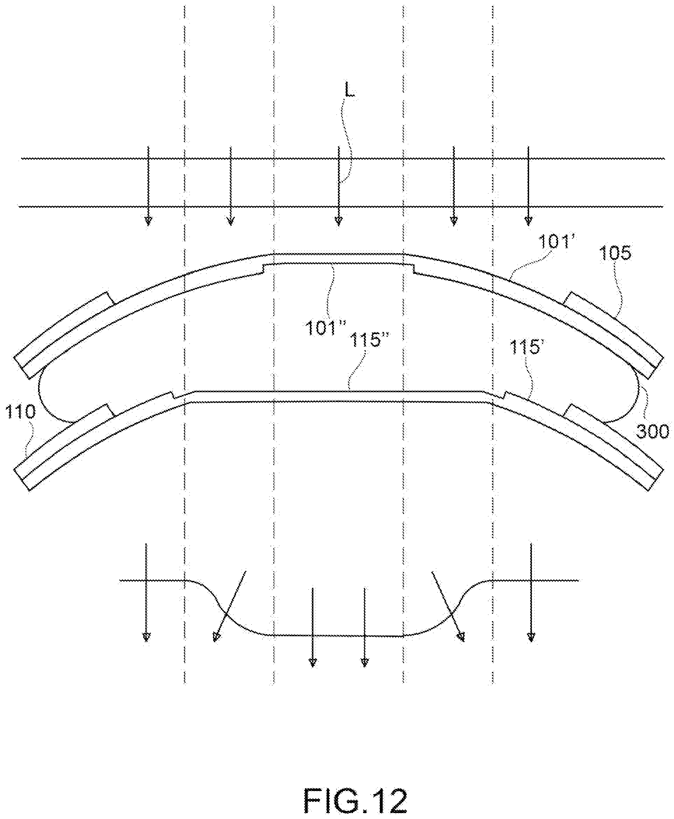

Figures 11 and 12 illustrate the effect of the annular portions 180 of reduced thickness and of sub-portions 101", 115" of reduced thickness, respectively, on the wavefront of the light beam L. In these examples, the annular portions 180 and the sub-portions 101", 115" have different diameters.

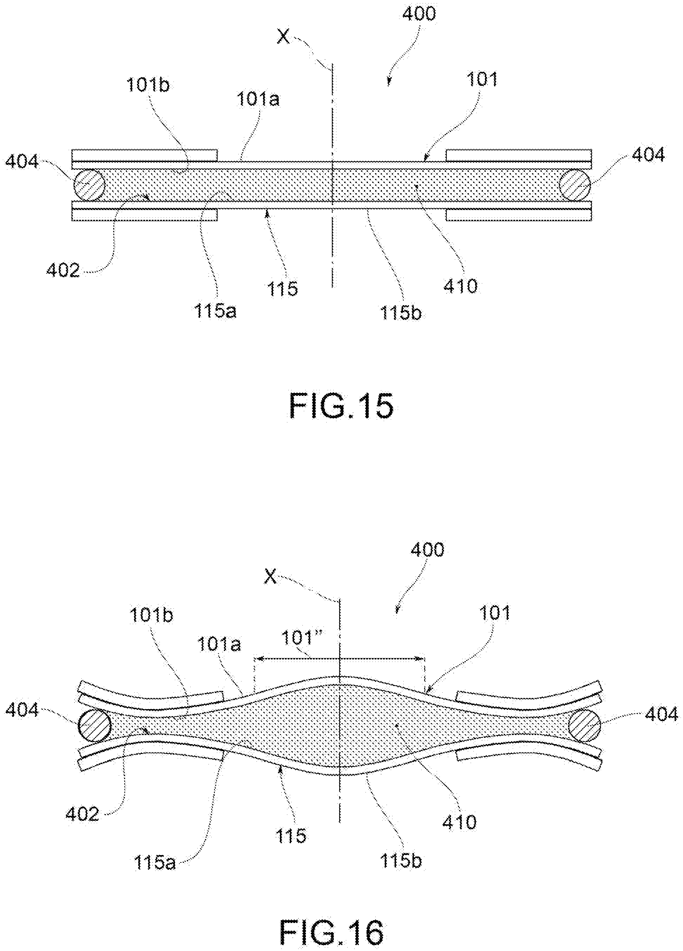

Figures 15 and 16 show a lens structure 400 according to a further embodiment, in which a transparent fluid or elastomeric material 410, for example a liquid, an elastomer or a gel, placed between the flexible glass membranes 101, 115, is radially constrained so as to be prevented from outwardly expanding in the radial direction, that is, in the direction perpendicular to the optical axis X.

For example, the transparent fluid or elastomeric material 410 is enclosed in a sealed constant volume chamber 402, which is formed in the space between the flexible glass membranes 101, 115.

In one embodiment, the sealed constant volume chamber 402 is formed by a non-compliant perimetral element 404 placed between the flexible glass membranes 101, 115 and surrounding the transparent fluid or elastomeric material. The expression "non-compliant" means that the perimetral element 404 is configured to withstand a radial force applied outwardly by the transparent fluid or elastomeric material 410 when compressed by the action of actuator means, as shown in figure 16.

For example, the perimetral element 404 is a sealing annular element, such as an o-ring, which sealingly engages the inner surfaces 101b, 115a of the flexible glass membranes 101, 115. In another embodiment, the perimetral element 404 can be a rigid support used for connecting the lens structure to a frame of the optical device.

In one embodiment, the actuators means 105, 110 are arranged on the outer surfaces 101a, 115b of the flexible glass membranes 101, 115.

In one embodiment, the transparent fluid or elastomeric material 410 is substantially incompressible.

It has been proved that, thanks to the conservation of the volume inside the sealed chamber, the focal power variation is enhanced, compared to a configuration in which a transparent fluid or elastomeric material is radially expandable.

It should be noted that conventional lenses rely on glass deformation induced by piezoelectric actuators that, by bending the glass on the periphery, induce a deformation of the whole surface. This deformation is typically parabolic and hence corresponds to pure defocus variation. The known architecture is designed to allow the fluid to flow away from the central part of the lens and let the deformation occur. However, the deformation is limited, especially in the central part, from fluid stiffness and/or constraints on the fluid chamber design that limit the fluid volume displacement.

In the embodiment described above, instead, the substantially incompressible fluid or solid is contained in a sealed constant volume chamber, preventing volume variations. For example, as shown in figure 16, as the actuator means deform the glass membrane downwards, volume conservation imposes the central part of the lens to move upwards with an amplified displacement with respect to conventional lenses. This implies that, from an optical point of view, some spherical aberration may be induced if the whole clear optical aperture is considered. However, if only the central portion 101" is considered, only defocus is induced and its total amount is greater than that of a conventional lens.

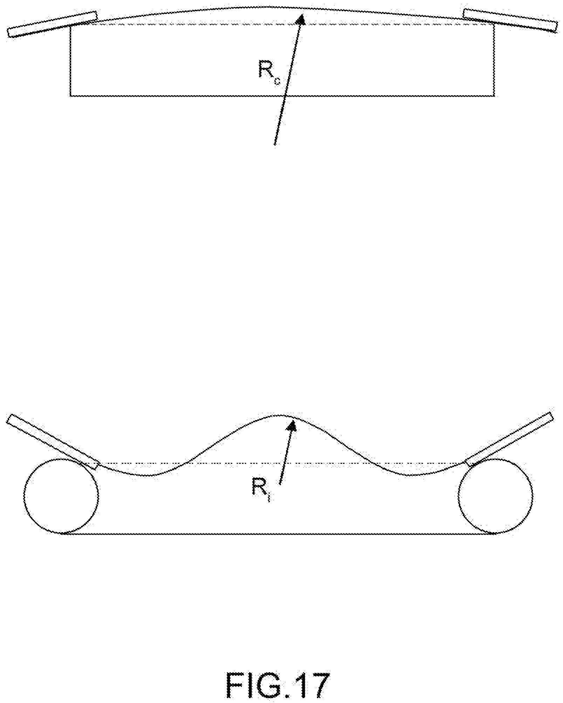

In other words, by the application of the same command to a conventional lens and to the lens according to the invention, the radius of curvature Ri of the improved lens is shorter than the radius of curvature Rc of the conventional lens (as shown in figure 17). The amplified lens can therefore change its focal length to a shorter focus. Therefore, it can increase substantially its focal power variation with the same command.

It is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

Moreover, while examples have been shown and described, it would be apparent to those skilled in the art having the benefit of this disclosure that many more modifications than mentioned above are possible without departing from the inventive concepts disclosed herein.

## Claims

1. Adaptive lens structure comprising a first and a second spaced apart flexible glass membranes (101, 115), the first flexible glass membrane having a first outer surface (101a), a first inner surface (101b), opposite said first outer surface, and a first transparent central portion (101'), the second flexible glass membrane (115) having a second inner surface (115a), facing said first inner surface (101b), a second outer surface (115b), opposite to second inner surface (115a), and a second transparent central portion (115'), the first and second transparent central portions (101', 115') forming the opposite sides of the optical aperture of the adaptive lens, the adaptive lens structure further comprising actuator means (105, 110) coupled to each of the two flexible glass membranes (101, 115) for deforming the optical aperture shape reversibly and accordingly to a command signal or a series of command signals, the adaptive lens structure further comprising a transparent fluid or elastomeric material (410) placed between the flexible glass membranes (101, 115) and radially constrained so as to be prevented from outwardly expanding in the radial direction,
**characterized in that** at least one of the flexible glass membranes (101, 115) is provided with an annular portion (180) of reduced thickness within the transparent central portion (101', 115'), said annular portion (180) being suitable for generating a localized curvature of the flexible glass membrane.

2. Adaptive lens structure according to claim 1, wherein the transparent fluid or elastomeric material (410) is enclosed in a sealed constant volume chamber (402) which is formed in the space between the flexible glass membranes (101, 115), such that to cause, when the actuator means are commanded, an amplified curvature of the glass membrane (101, 115) in a central portion (101") of the optical aperture, creating in that area an amplified optical power variation.

3. Adaptive lens structure according to claim 2, wherein the sealed constant volume chamber (402) is formed by a non-compliant perimetral element (404) placed between the flexible glass membranes (101, 115) and surrounding the transparent fluid or elastomeric material (410) .

4. Adaptive lens structure according to claim 3, wherein the perimetral element (404) is a sealing element, such as an o-ring, which sealingly engages the inner surfaces (101b, 115a) of the flexible glass membranes (101, 115) keeping the inner volume constant.

5. Adaptive lens structure according to any of the previous claims, wherein the actuator means (105, 110) are arranged on the outer surfaces (101a, 115b) of the flexible glass membranes (101, 115).

6. Adaptive lens structure according to any of the previous claims, wherein the transparent fluid or elastomeric material (410) is substantially incompressible.

7. Adaptive lens structure comprising a first and a second spaced apart flexible glass membranes (101, 115), the first flexible glass membrane having a first outer surface (101a), a first inner surface (101b), opposite said first outer surface, and a first transparent central portion (101'), the second flexible glass membrane (115) having a second inner surface (115a), facing said first inner surface (101b), a second outer surface (115b), opposite to second inner surface (115a), and a second transparent central portion (115'), the first and second transparent central portions (101', 115') forming the opposite sides of the optical aperture of the adaptive lens, the adaptive lens structure further comprising a transparent elastomeric material (300) supporting both the flexible glass membranes (101, 115) and extending at least in the space comprised between the first and second transparent central portions (101', 115'),
**characterized in that** at least one of the flexible glass membranes (101, 115) is provided with an annular portion (180) of reduced thickness within the transparent central portion (101', 115'), said annular portion (180) being suitable for generating a localized curvature of the flexible glass membrane.

8. Adaptive lens structure according to any of the previous claims, wherein the elastomeric material (300; 410) is an elastomer or a gel.

9. Adaptive lens structure according to any of the previous claims, wherein the elastomeric material (300; 410)) has a linear response to the flexible glass membranes' deformations.

10. Adaptive lens structure according to any of the claims 7-9, wherein actuator means (105, 110) are coupled to each of the two flexible glass membranes (101, 115) and are suitable for deforming the optical aperture shape reversibly and accordingly to a command signal or a series of command signals.

11. Adaptive lens structure according to any of the claims 1-6 and 10, wherein the actuator means are piezoelectric, piezoelectric benders, piezoelectric bimorph, piezoelectric multi-layer, chemical, electromagnetic, piezoelectric stack, magnetostrictive, electrostatic or bimetallic strip.

12. Adaptive lens structure according to any of the claims 1-6, 10 and 11, wherein the actuator means are divided in independent sectors placed around the transparent central portion (101', 115') of the respective flexible glass membrane (101; 115).

13. Adaptive lens structure according to any of the claims 1-6 and 10-12, wherein the actuator means are placed on one of the outer or inner surfaces of the respective flexible glass membrane (101; 115).

14. Adaptive lens structure according to any of the claims 1-6 and 10-12, wherein the actuator means are placed on both the outer and inner surfaces of the respective flexible glass membrane (101; 115).

15. Adaptive lens structure according to any of the previous claims, wherein at least one of the flexible glass membranes has, within the transparent central portion (101', 115') a sub-portion (101", 115") of reduced thickness.

## Patentansprüche

1. Adaptive-Linse-Struktur, umfassend eine erste und eine zweite voneinander beabstandete flexible Glasmembran (101, 115), wobei die erste flexible Glasmembran eine erste Außenfläche (101a), eine erste Innenfläche (101b) gegenüberliegend bzw. entgegengesetzt zu der ersten Außenfläche und einen ersten transparenten Mittelabschnitt (101') aufweist, wobei die zweite flexible Glasmembran (115) eine zweite Innenfläche (115a), die der ersten Innenfläche (101b) zugewandt ist, eine zweite Außenfläche (115b) gegenüberliegend bzw. entgegengesetzt zu der zweiten Innenfläche (115a) und einen zweiten transparenten Mittelabschnitt (115') aufweist, wobei der erste und der zweite transparente Mittelabschnitt (101', 115') die gegenüberliegenden bzw. entgegengesetzten Seiten der optischen Apertur der adaptiven Linse bilden, wobei die Adaptive-Linse-Struktur ferner Aktormittel (105, 110) umfasst, die mit jeder der beiden flexiblen Glasmembranen (101, 115) gekoppelt sind, um die Form der optischen Apertur reversibel und gemäß einem Befehlssignal oder einer Reihe von Befehlssignalen zu verformen, wobei die Adaptive-Linse-Struktur ferner ein transparentes Fluid oder elastomeres Material (410) umfasst, das zwischen den flexiblen Glasmembranen (101, 115) platziert und radial begrenzt ist, um zu verhindern, dass es sich in der radialer Richtung nach außen ausdehnt; **dadurch gekennzeichnet, dass** zumindest eine der flexiblen Glasmembranen (101, 115) mit einem ringförmigen Abschnitt (180) reduzierter Dicke innerhalb des transparenten zentralen Abschnitts (101', 115') versehen ist, wobei der ringförmige Abschnitt (180) geeignet ist, eine lokalisierte Krümmung der flexiblen Glasmembran zu erzeugen.

2. Adaptive-Linse-Struktur nach Anspruch 1, wobei das transparente Fluid oder elastomere Material (410) in einer abgedichteten Kammer (402) konstanten Volumens eingeschlossen ist, die in dem Raum zwischen den flexiblen Glasmembranen (101, 115) ausgebildet ist, so dass, wenn die Aktormittel Befehle erhalten, eine verstärkte Krümmung der Glasmembran (101, 115) in einem zentralen Abschnitt (101") der optischen Apertur bewirkt wird, wodurch in diesem Bereich eine verstärkte Variation der optischen Leistung erzeugt wird.

3. Adaptive-Linse-Struktur nach Anspruch 2, wobei die abgedichtete Kammer (402) konstantes Volumens durch ein nicht konformes perimetrales Element (404) gebildet ist, das zwischen den flexiblen Glasmembranen (101, 115) platziert ist und das transparente Fluid oder elastomere Material (410) umgibt.

4. Adaptive-Linse-Struktur nach Anspruch 3, wobei das perimetrale Element (404) ein Dichtungselement ist, beispielsweise ein O-Ring, das bzw. der die Innenflächen (101b, 115a) der flexiblen Glasmembranen (101, 115) dichtend in Eingriff nimmt, wodurch das Innenvolumen konstant gehalten wird.

5. Adaptive-Linse-Struktur nach einem der vorhergehenden Ansprüche, wobei die Aktormittel (105, 110) an den Außenflächen (101a, 115b) der flexiblen Glasmembranen (101, 115) angeordnet sind.

6. Adaptive-Linse-Struktur nach einem der vorhergehenden Ansprüche, wobei das transparente Fluid oder elastomere Material (410) im Wesentlichen inkompressibel ist.

7. Adaptive-Linse-Struktur, umfassend eine erste und eine zweite voneinander beabstandete flexible Glasmembran (101, 115), wobei die erste flexible Glasmembran eine erste Außenfläche (101a), eine erste Innenfläche (101b) gegenüberliegend bzw. entgegengesetzt zu der ersten Außenfläche und einen ersten transparenten Mittelabschnitt (101') aufweist, wobei die zweite flexible Glasmembran (115) eine zweite Innenfläche (115a), die der ersten Innenfläche (101b) zugewandt ist, eine zweite Außenfläche (115b) gegenüberliegend bzw. entgegengesetzt zu der zweiten Innenfläche (115a) und einen zweiten transparenten Mittelabschnitt (115') aufweist, wobei der erste und der zweite transparente Mittelabschnitt (101', 115') die gegenüberliegenden bzw. entgegengesetzten Seiten der optischen Apertur der adaptiven Linse bilden, wobei die Adaptive-Linse-Struktur ferner ein transparentes elastomeres Material (300) umfasst, das sowohl die flexiblen Glasmembranen (101, 115) stütz bzw. trägt als auch sich zumindest in dem Raum erstreckt, der zwischen dem ersten und dem zweiten transparenten Mittelabschnitt (101', 115') umfasst bzw. eingeschlossen ist,
**dadurch gekennzeichnet ist, dass** zumindest eine der flexiblen Glasmembranen (101, 115) mit einem ringförmigen Abschnitt (180) reduzierter Dicke innerhalb des transparenten zentralen Abschnitts (101', 115') versehen ist, wobei der ringförmige Abschnitt (180) geeignet ist, eine lokalisierte Krümmung der flexiblen Glasmembran zu erzeugen.

8. Adaptive-Linse-Struktur nach einem der vorhergehenden Ansprüche, wobei das elastomere Material (300; 410) ein Elastomer oder ein Gel ist.

9. Adaptive-Linse-Struktur nach einem der vorhergehenden Ansprüche, wobei das elastomere Material (300; 410) ein lineares Ansprechen auf die Verformungen der flexiblen Glasmembranen aufweist.

10. Adaptive-Linse-Struktur nach einem der Ansprüche 7-9, wobei die Aktormittel (105, 110) mit jeder der beiden flexiblen Glasmembranen (101, 115) gekoppelt sind und geeignet sind, die Form der optischen Apertur reversibel und gemäß einem Befehlssignal oder einer Reihe von Befehlssignalen zu verformen.

11. Adaptive-Linse-Struktur nach einem der Ansprüche 1-6 und 10, wobei die Aktormittel piezoelektrisch, piezoelektrische Biegeelemente, piezoelektrisch bimorph, piezoelektrisch mehrschichtig, chemisch, elektromagnetischer, piezoelektrische Stapel, magnetostriktiv, elektrostatisch oder Bimetallstreifen sind.

12. Adaptive-Linse-Struktur nach einem der Ansprüche 1-6 und 10 und 11, wobei die Aktormittel in unabhängige Sektoren unterteilt sind, die um den transparenten Mittelabschnitt (101', 115') der jeweiligen flexiblen Glasmembran (101; 115) herum platziert sind.

13. Adaptive-Linse-Struktur nach einem der Ansprüche 1-6 und 10 bis 12, wobei die Aktormittel auf einer der Außen- oder Innenfläche der jeweiligen flexiblen Glasmembran (101; 115) platziert sind.

14. Adaptive-Linse-Struktur nach einem der Ansprüche 1-6 und 10 bis 12, wobei die Aktormittel sowohl auf der Außen- als auch auf der Innenfläche der jeweiligen flexiblen Glasmembran (101; 115) platziert sind.

15. Adaptive-Linse-Struktur nach einem der vorhergehenden Ansprüche, wobei zumindest eine der flexiblen Glasmembranen innerhalb des transparenten Mittelabschnitts (101', 115') einen Unterabschnitt (101", 115") reduzierter Dicke aufweist.

## Revendications

1. Structure de lentille adaptative comprenant une première et une seconde membranes de verre flexibles (101, 115) espacées, la première membrane de verre flexible ayant une première surface externe (101a), une première surface interne (101b), opposée à ladite première surface externe, et une première partie centrale transparente (101'), la seconde membrane de verre flexible (115) ayant une seconde surface interne (115a), faisant face à ladite première surface interne (101b), une seconde surface externe (115b), opposée à la seconde surface interne (115a), et une seconde partie centrale transparente (115'), les première et seconde parties centrales transparentes (101', 115') formant les côtés opposés de l'ouverture optique de la lentille adaptative, la structure de lentille adaptative comprenant en outre des moyens actionneurs (105, 110) couplés à chacune des deux membranes de verre flexibles (101, 115) pour déformer la géométrie d'ouverture optique de manière réversible et selon un signal de commande ou une série de signaux de commande, la structure de lentille adaptative comprenant en outre un matériau fluide ou élastomère transparent (410) placé entre les membranes de verre flexibles (101, 115) et radialement contraint de façon à être empêché de s'étendre vers l'extérieur dans la direction radiale,
**caractérisée en ce qu'**au moins l'une des membranes de verre flexibles (101, 115) est munie d'une partie annulaire (180) d'épaisseur réduite à l'intérieur de la partie centrale transparente (101', 115'), ladite partie annulaire (180) étant appropriée pour générer une courbure localisée de la membrane de verre flexible.

2. Structure de lentille adaptative selon la revendication 1, dans laquelle le matériau fluide ou élastomère transparent (410) est enfermé dans une chambre étanche à volume constant (402) qui est formée dans l'espace entre les membranes de verre flexibles (101, 115), de façon à engendrer, lorsque les moyens actionneurs sont commandés, une courbure amplifiée de la membrane de verre (101, 115) dans une partie centrale (101") de l'ouverture optique, créant dans cette zone une variation de puissance optique amplifiée.

3. Structure de lentille adaptative selon la revendication 2, dans laquelle la chambre étanche à volume constant (402) est formée par un élément périmétrique non souple (404) placé entre les membranes de verre flexibles (101, 115) et encerclant le matériau fluide ou élastomère transparent (410).

4. Structure de lentille adaptative selon la revendication 3, dans laquelle l'élément périmétrique (404) est un élément d'étanchéité, tel qu'un joint torique, qui vient en prise de manière étanche avec les surfaces internes (101b, 115a) des membranes de verre flexibles (101, 115) en maintenant le volume interne constant.

5. Structure de lentille adaptative selon l'une quelconque des revendications précédentes, dans laquelle les moyens actionneurs (105, 110) sont agencés sur les surfaces externes (101a, 115b) des membranes de verre flexibles (101, 115).

6. Structure de lentille adaptative selon l'une quelconque des revendications précédentes, dans laquelle le matériau fluide ou élastomère transparent (410) est sensiblement incompressible.

7. Structure de lentille adaptative comprenant une première et une seconde membranes de verre flexibles (101, 115) espacées, la première membrane de verre flexible ayant une première surface externe (101a), une première surface interne (101b), opposée à ladite première surface externe, et une première partie centrale transparente (101'), la seconde membrane de verre flexible (115) ayant une seconde surface interne (115a), faisant face à ladite première surface interne (101b), une seconde surface externe (115b), opposée à la seconde surface interne (115a), et une seconde partie centrale transparente (115'), les première et seconde parties centrales transparentes (101', 115') formant les côtés opposés de l'ouverture optique de la lentille adaptative, la structure de lentille adaptative comprenant en outre un matériau élastomère transparent (300) portant les deux membranes de verre flexibles (101, 115) et s'étendant au moins dans l'espace compris entre les première et seconde parties centrales transparentes (101', 115'),
**caractérisée en ce qu'**au moins l'une des membranes de verre flexibles (101, 115) est munie d'une partie annulaire (180) d'épaisseur réduite à l'intérieur de la partie centrale transparente (101', 115'), ladite partie annulaire (180) étant appropriée pour générer une courbure localisée de la membrane de verre flexible.

8. Structure de lentille adaptative selon l'une quelconque des revendications précédentes, dans laquelle le matériau élastomère (300 ; 410) est un élastomère ou un gel.

9. Structure de lentille adaptative selon l'une quelconque des revendications précédentes, dans laquelle le matériau élastomère (300 ; 410) présente une réponse linéaire aux déformations des membranes de verre flexibles.

10. Structure de lentille adaptative selon l'une quelconque des revendications 7 à 9, dans laquelle des moyens actionneurs (105, 110) sont couplés à chacune des deux membranes de verre flexibles (101, 115) et sont appropriés pour déformer la géométrie d'ouverture optique de manière réversible et selon un signal de commande ou une série de signaux de commande.

11. Structure de lentille adaptative selon l'une quelconque des revendications 1 à 6 et 10, dans laquelle les moyens actionneurs sont piézoélectriques, à oscillateurs piézoélectriques, à bimorphe piézoélectrique, multicouches piézoélectriques, chimiques, électromagnétiques, à empilement piézoélectrique, magnétostrictifs, électrostatiques ou à bande bimétallique.

12. Structure de lentille adaptative selon l'une quelconque des revendications 1 à 6, 10 et 11, dans laquelle les moyens actionneurs sont divisés en secteurs indépendants placés autour de la partie centrale transparente (101', 115') de la membrane de verre flexible (101 ; 115) respective.

13. Structure de lentille adaptative selon l'une quelconque des revendications 1 à 6 et 10 à 12, dans laquelle les moyens actionneurs sont placés sur l'une des surfaces externe ou interne de la membrane de verre flexible (101 ; 115) respective.

14. Structure de lentille adaptative selon l'une quelconque des revendications 1 à 6 et 10 à 12, dans laquelle les moyens actionneurs sont placés sur les deux surfaces externe et interne de la membrane de verre flexible (101 ; 115) respective.

15. Structure de lentille adaptative selon l'une quelconque des revendications précédentes, dans laquelle au moins l'une des membranes de verre flexibles présente, à l'intérieur de la partie centrale transparente (101', 115') une sous-partie (101", 115") d'épaisseur réduite.
